# EUROPEAN PATENT APPLICATION

(11) **EP 3 908 093 A1**
(43) Date of publication of application: **10.11.2021**
(21) Application number: 20211193.6
(22) Date of filing: 02.12.2020
(51) Int. Cl.: H05K 7/20, G01S 5/00, G01S 5/14, G01S 11/06, G05D 1/00, G05D 1/02, G05D 23/19, H04L 12/28, H04L 29/08

(54) **DATA CENTRE MONITORING**

(30) Priority: 06.05.2020 GB 202006705
(71) Applicant: Ekkosense Ltd., Lincoln, Lincolnshire LN1 1XW (GB)
(72) Inventor: CORDER, David, Nottingham, Nottinghamshire NG7 2TU (GB); REDSHAW, Stuart, Nottingham, Nottinghamshire NG7 2TU (GB)
(74) Representative: Barker Brettell LLP

(57) **Abstract**

The invention relates to monitoring of a data centre, in particular through use of measurements from signals received by multiple receivers at multiple locations from sensors distributed throughout the data centre. Example embodiments include a computer-implemented method of monitoring a data centre (110) comprising a plurality of sensors (101a-d) and a plurality of receiver hubs (102a-c), each receiver hub (102a-c) configured to receive radio signal packets from each of the plurality of sensors (101a-d), the method comprising: determining for each sensor (101a-d) an array of parameters derived from the radio signals packets received by each hub (102a-c); determining a change over time in the array of parameters for each sensor (101a-d); and providing an alert if the change over time for one or more of the plurality of sensors (101a-d) exceeds a predetermined threshold.

## Description

### Field of the Invention

The invention relates to monitoring of a data centre, in particular through use of measurements from signals received by multiple receivers at multiple locations from sensors distributed throughout the data centre.

### Background

Monitoring thermal, cooling and power performance of a data centre is critical to achieving efficient operation. To do this, physical measurement data may be provided from a variety of sensors positioned around the data centre. An example data centre monitoring system is disclosed in WO 2019/043387 A1, in which a cooling system is automatically monitored using temperature signals received from a plurality of radio linked or wireless sensors positioned on equipment racks or elsewhere throughout the data centre.

A problem with data centre monitoring is that alterations may occur within the physical environment of the data centre without the monitoring system being updated. This may for example involve the position of sensors being changed, resulting in incorrect readings being transmitted or sensors being assigned to an incorrect object in the model or software. A further problem is the possibility of erroneous or malicious sensor data being introduced by wireless transmission.

### Summary of the Invention

In accordance with the invention there is provided a computer-implemented method of monitoring a data centre comprising a plurality of sensors and a plurality of receiver hubs, each receiver hub configured to receive radio signal packets from each of the plurality of sensors, the method comprising:
determining for each sensor an array of parameters derived from the radio signals packets received by each hub;
determining a change over time in the array of parameters for each sensor; and
providing an alert if the change over time for one or more of the plurality of sensors exceeds a predetermined threshold.

The method may be used to determine when a sensor in the data centre has been moved by providing an alert when a characteristic fingerprint, represented by the determined array or parameters, of the sensor changes. The method can also detect when erroneous or malicious sensor data is transmitted that would otherwise be attributed to a particular sensor.

The method may be implemented on a computer system remotely located from the data centre being monitored, the computer system receiving data from each of the hubs via a local computer at the data centre.

The array of parameters for each sensor may comprise measurements of relative signal strength of the radio signal packets received by the plurality of hubs. An advantage of using received signal strength, known as RSSI, is that such measurements are readily available using existing technology and do not require changes to the sensor technology, which may be based on low cost and low power battery-powered devices.

In some alternatives, the array of parameters for each sensor may comprise measurements of a distance or angle of arrival to each of the plurality of hubs, or a time of flight of a signal from the sensor to each of the plurality of hubs. Such alternatives may provide increased accuracy of positioning of each sensor, but with additional complexity and cost for the sensors and hubs and may require additional power for the sensors.

The predetermined threshold may be calculated from an averaged array of parameters determined over a preceding period of time. Averaging the array of parameters over time can be used to reduce the error due to variability in received sensor data. The period of time may for example be between 1 and 10 hours.

The data centre may comprise at least three hubs, enabling an array of parameters to be reliably created for multiple sensors. Using at least three hubs also may enable triangulation of the position of each sensor to be determined, for example when using phase-based distance ranging.

The plurality of sensors may each be configured to measure at least temperature, and may also measure humidity and/or an indication of electrical power drawn by an equipment rack to which each sensor is attached. One or more of the sensors may be configured to measure air flow, for example by measuring electrical current supplied to a fan. One or more of the sensors may be configured to measure differential air pressure, for example measuring a difference between air pressure in the room compared with that in air vents or ducts beneath the floor. The plurality of sensors may be mounted on equipment racks, air vents, air handling units or other locations within the data centre. Other sensors may be positioned in the data centre to merely transmit regular signals containing status and identification information to enable tracking of an object to which the sensor is attached. A sensor may for example be discretely and/or securely attached to an object to enable tracking of the object using the method described herein.

The alert may comprise an indication in a computer-generated representation of the data centre of a location of the one or more of the plurality of sensors for which the alert is provided. A user of a computer system performing the method may then readily be able to see where the sensor problem is potentially arising and can use this to carry out a check in the data centre.

The alert may comprise a message identifying the one or more of the plurality of sensors for which the alert is provided.

If the change over time exceeds the predetermined threshold for more than one of the plurality of sensors, the indication in the computer-generated representation of the data centre may comprise an area in the data centre covering the more than one of the plurality of sensors. If, for example, a pair of sensors have been inadvertently swapped, this will provide an immediate indication of where in the data centre remedial action will need to be taken.

The step of determining a change over time for each sensor may be repeated at intervals of 10 minutes or less.

In accordance with a second aspect of the invention there is provided a computer program comprising instructions for causing a computer to perform the method according to any preceding claim. The computer program may be stored in a non-transitory storage medium. The instructions cause a computer to monitor a data centre comprising a plurality of sensors and a plurality of receiver hubs, where each receiver hub receives radio signal packets from each of the plurality of sensors, the instructions causing the computer to:
determine for each sensor an array of parameters derived from the radio signals packets received by each hub;
determine a change over time in the array of parameters for each sensor; and
provide an alert if the change over time for one or more of the plurality of sensors exceeds a predetermined threshold.

Other features relating to the first aspect may also be applied to the computer program according to the second aspect.

In accordance with a third aspect of the invention there is provided a computer system configured to perform the method according to the first aspect. The computer system is configured to monitor a data centre comprising a plurality of sensors and a plurality of receiver hubs, where each receiver hub is configured to receive radio signal packets from each of the plurality of sensors, the computer system being configured to:
determine for each sensor an array of parameters derived from the radio signals packets received by each hub;
determine a change over time in the array of parameters for each sensor; and
provide an alert if the change over time for one or more of the plurality of sensors exceeds a predetermined threshold.

Other features relating to the first aspect may also be applied to the computer system according to the first aspect.

### Detailed Description

The invention is described in further detail below by way of example and with reference to the accompanying drawings, in which:
Figure 1 is a schematic diagram of various components of a remote data centre monitoring system;
Figure 2 is a screenshot of a computer-generated representation of a data centre;
Figures 3a-f are plots of signal strength received by a plurality of hubs from a plurality of sensors arranged within a data centre;
Figures 4a) and 4b) illustrate example fingerprints, i.e. arrays of parameters, for two sensors in a data centre;
Figure 4c is a measure of the signal strength difference and error for the fingerprints of Figures 4a) and 4b);
Figure 4d is a plot of difference in signal strength for a pair of sensors compared with changes over time for each sensor;
Figure 5 is a schematic flow diagram of an example method of determining arrays of parameters for sensors in a data centre; and
Figure 6 is a schematic flow diagram of an example method of monitoring sensors in a data centre for changes in fingerprints.

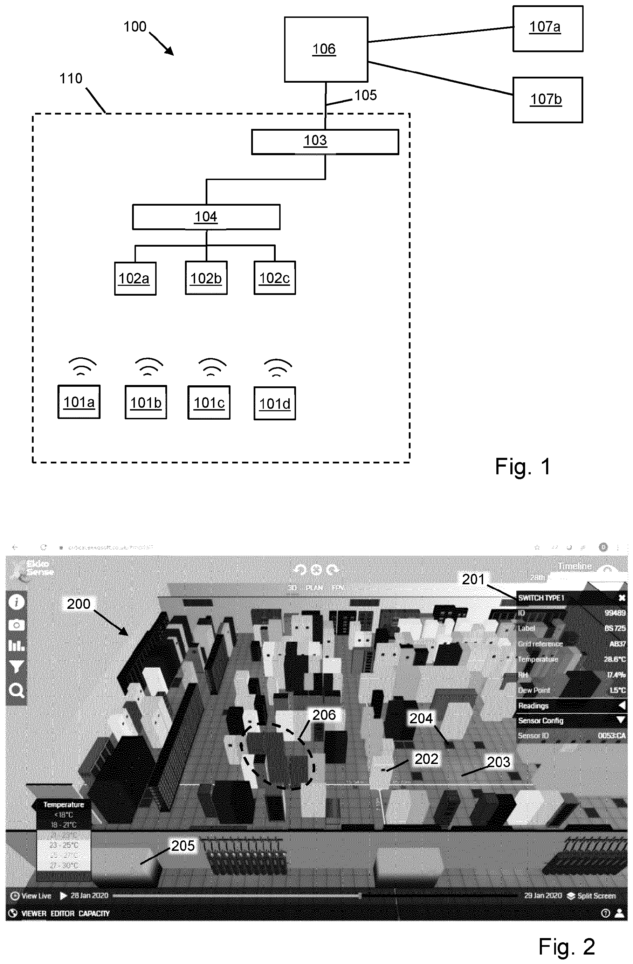

An example schematic layout of a data centre monitoring system 100 is shown in Figure 1. Within the data centre 110, a plurality of sensors 101a-d are positioned at various locations, for example at each equipment rack. Each sensor 101a-d may measure one or more temperature values, for example an inlet and/or outlet air temperature of an associated equipment rack. Each sensor 101a-d may also measure one or more other parameters, such as relative humidity, air flow or differential air pressure. Signals from each of the sensors 101a-d are wirelessly transmitted periodically and received by a plurality of wireless receiving hubs 102a-c. Each hub 102a-c is configured to receive signals from any of the plurality of sensors 101a-d and may receive signals from multiple sensors. The hubs 102a-c may also each be configured to generate wireless transmissions to enable other hubs to receive and record signals in a similar way to the plurality of sensors 101a-d, enabling checks to be performed on the physical location of each hub. The hubs 102a-c are connected to a common local computer 103 via a switching unit 104. The switching unit 104 may have a plurality of wired connections, for example wired Ethernet connections, connecting each of the plurality of hubs 102a-c to the switching unit 104. In some alternative arrangements the connections between the hubs 102a-c and switching unit 104 may be wireless, for example via IEEE 802.11x wireless links. Wired Ethernet connections may, however, be preferred due to the higher data rates possible and reduced susceptibility to interference. The hubs 102a-c may also receive electrical power via the connections to the switching unit 104, for example using Power over Ethernet (e.g. according to an IEEE 802.3 standard).

The local computer 103, which may be provided at the data centre 110 being monitored, is configured to receive signals from each of the hubs 102a-c, aggregate the received data and forward the data over a network connection 105 to a remote computer system 106 for processing. The remote computer system 106 may be cloud-based, i.e. located in another data centre, and accessible to client computers 107a, 107b via the internet. The computer system 106 runs software, such as EkkoSoft Critical (ekkosense.com), that processes the data received from the local computer 103 and updates a model of the data centre 110 with temperature and other data transmitted by the sensors 101a-d. The model enables thermal, cooling and power performance of the data centre 110 to be visualised and optimised. The model also uses the measurement data to advise and assist a user on optimisations that could be made to the data centre 110, for example reducing thermal risk due to equipment operating at high temperatures, reducing cooling energy requirements and providing insights into spare capacity that may be available for additional equipment. This requires data being reliably available over extended periods of time from all parts of the data centre 110.

Upon installation of the monitoring system 100, a sensor 101a-d is attached to each asset of interest, which may be each equipment rack within the data centre 110. Each sensor 110a-d has a unique serial number that is transmitted with each measurement data message as part of a data packet containing the measurement data. The serial number of each sensor 101a-d is associated with a corresponding object in the computer model run by the computer system 106.

Figure 2 is a screenshot of an example visual representation of a computer model of a data centre in which a monitoring system of the type described above is installed. The computer model representation shows a layout of the data centre 200, including the location of each equipment rack along with other components such as floor tiles 203, vents 204 and air handling units 205 forming the cooling system for the data centre 200. Measurement data 201 received from each sensor may be accessed by identifying a particular piece of equipment 202 upon which a sensor is installed. In the illustrated example, the unique serial number (or ID), label and grid reference (i.e. the location) of the sensor is provided, along with the measured temperature, relative humidity and dew point (which may be calculated from the humidity and temperature measurements). A representation of the measured temperature of each piece of equipment may be shown in the computer model representation by colouring the equipment according to a colour code, for example with blue representing lower temperatures grading towards red for higher temperatures. This can allow for easy identification of equipment that may be operating at excessive temperatures, for example the group of racks 206 shown in Figure 2, which are all shown as red in the model, indicating a measured temperature of over 30°C. Corrective action may be taken as a result, for example by redirecting cooling capacity to the location in which the group of racks 206 is located.

Certain problems can occur over time as updates are made to the data centre. Firstly, the sensors are typically attached to the doors of server racks and the doors may be removed to allow access to the servers within. If these doors, which may be interchangeable, are not replaced correctly the sensor measurement data will not correspond to the particular asset being monitored in the computer model. The data supplied to the computer model will therefore not accurately represent the actual physical data centre. Secondly, assets may be decommissioned. As that is done, the association between a decommissioned asset and its associated sensor should be removed. In practice, however, this might not be done, and although the sensor may be stored elsewhere it may still continue transmitting measurement data that is received by one or more of the hubs. This again can result in invalid data being supplied to the computer model. Thirdly, a sensor may be removed from a decommissioned asset and attached to a new one but without updating the computer model. The resulting data input to the computer model will again not match the computer model. Any of these scenarios can result in the computer model being less reliable and less able to be used to optimise operation of the data centre cooling system.

Every message sent by each sensor 101a-d, which is sent as part of a data packet, upon being received by a hub 102a-c has a received signal strength indication (RSSI) value associated with it by the hub, which can be stored and linked to the received measurement data. The RSSI for each data packet will correspond to the power of the signal received by a given hub from a given sensor. Generally RSSI will relate to the distance a signal has travelled from a sensor to a hub, with the strength reducing in inverse proportion to the square of the distance. Reflections and attenuation by intervening objects will, however, cause the strength to deviate from the ideal inverse square relationship. Additionally, the absolute strength of each signal upon transmission is not necessarily fixed but can vary depending on variability between transmitters, both in actual transmitted power and in antenna gain, as well as battery condition. RSSI itself cannot therefore be reliably used as a measure of distance between a transmitter and receiver. However, since every transmission from a sensor will tend to have the same initial transmission strength and is received by multiple hubs, and since the relative locations of the sensors and hubs are fixed over time, it is possible to obtain multiple RSSI values for each data packet. In an ideal environment these RSSI values could be used to correlate with distance and allow for triangulation of each sensor. Given the complex environment, however, this is not possible to any practical degree of accuracy. The multiple readings from each sensor can, however, be used to determine a characteristic 'fingerprint' for each sensor because the relative signal strengths from each sensor to each hub will tend to be stable over time, provided the physical environment and locations of the hubs and sensors is stable.

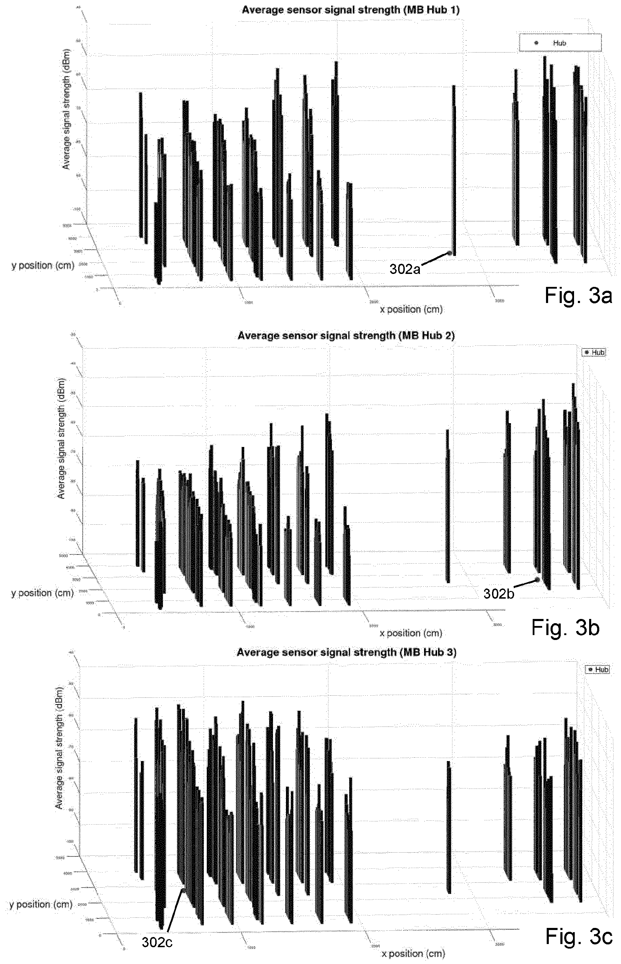

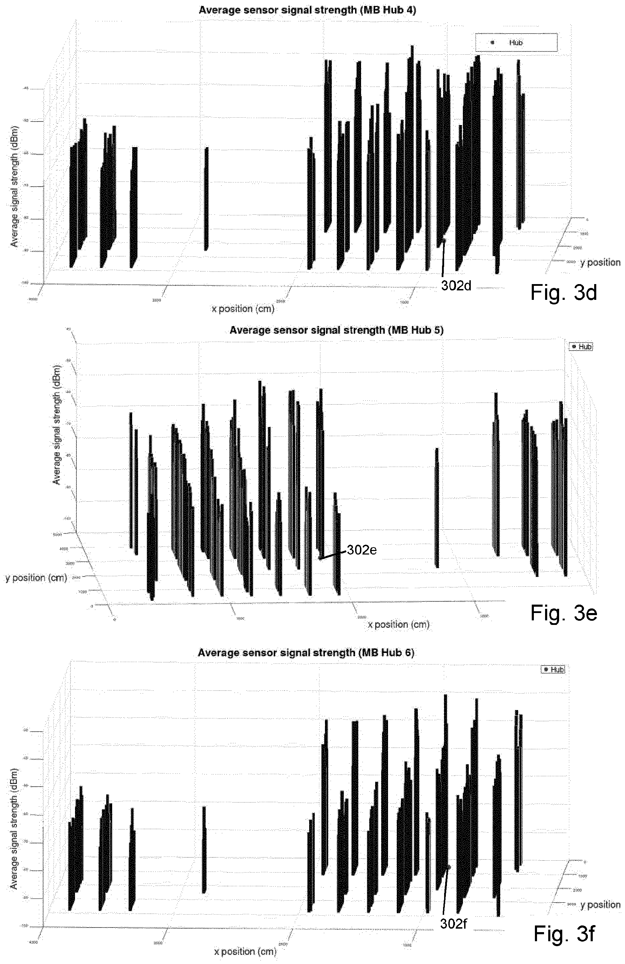

Figures 3a-f illustrate plots of RSSI values acquired from sensors distributed throughout an example data centre, as received by six different hubs 302a-f at different locations. The location of the hub 302a-f in each case is indicated on the plots. The x and y axes in each plot show the location, i.e. grid reference, across the floor of the data centre, while the z axis shows the average measured signal strength (dBm) for each sensor as measured by each hub 302a-f. As expected, the received signal strength is highest from sensors that are closest to a given hub, but the variation in signal strength across the data centre is more complex than a simple inverse square relationship with distance. From these sets of data, a characteristic fingerprint for each sensor can be obtained. It has been found that these fingerprints are relatively consistent over time, within bounds of variability. It is therefore feasible to use RSSI values as indications of a particular location for any given sensor. The fingerprint for each sensor may be determined from an average of multiple values received over time.

Due to the unpredictable variation in signal strength in a complex environment such as a data centre, the particular fingerprint of a sensor cannot realistically be reproduced in a sensor that is not at the same location. Spoofing the fingerprint of a particular sensor is therefore particularly challenging, enabling a degree of security to the existing sensor array. The complex radio environment thereby becomes an advantage rather than a problem for tracking the position of each sensor.

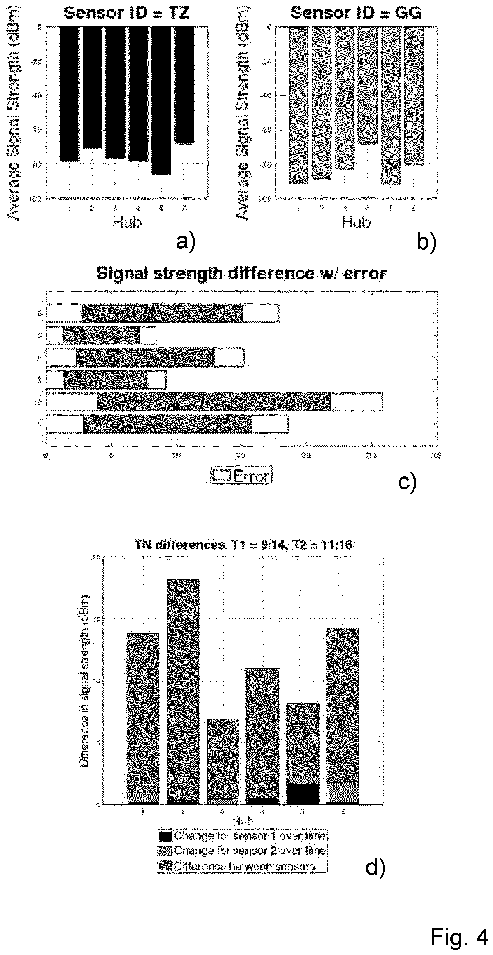

Figure 4 illustrates fingerprints for two example sensors. In Figure 4a) and 4b) the average signal strength (in dBm) as received by each of six hubs is indicated. In Figure 4c) the difference between the signal strengths is indicated, together with the error. In Figure 4d) the differences in signal strength and the change over time for a pair of sensors is indicated. As can be seen from Figures 4c) and 4d), the difference between signal strengths is considerably greater than both the error and variability over time, making it possible to characterise any particular sensor by the series of signal strength measurements as received by multiple hubs. In this example the two sensors were located on adjacent racks, therefore representing a 'worst case' scenario in terms of the smallest distance between sensors that may be detected. The clear differences between the fingerprints for each sensor indicate that a change in location for one sensor by only the distance of one rack location can be detected. The minimum distance between any pair of sensors may therefore be as small as 1m, or even as small as around 10cm, while still enabling the method described herein to distinguish between the fingerprints of the sensors.

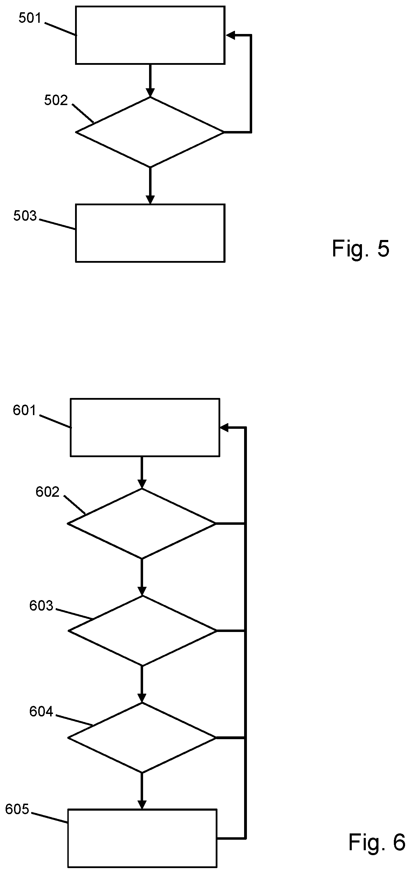

Figure 5 illustrates a flowchart of an example method of acquiring a fingerprint for each of a plurality of sensors distributed throughout a data centre. In a first step 501, an average value of an array of parameters is acquired for each sensor based on signals received over a set period of time (for example one hour or more) by a plurality of hubs. In a second step 502, to test the validity of the averaged arrays of parameters differences between arrays for pairs of sensors are determined. The pairs of sensors may be selected to be neighbouring pairs as set out in the computer model of the data centre. A particular array is considered valid if a difference between it and any other array, or an array for a neighbouring sensor, is greater than an error measurement for each parameter in the array. The error measurement may for example be determined from a variation in a measured parameter over the set period of time. If any particular array is not considered valid, the process at step 501 may be repeated with the set period of time increased, followed by repeating step 502. In some cases signals may not be received from one or more of the plurality of sensors by all of the plurality of hubs, or may not be received at a sufficiently high signal strength to exceed the error measurement, and a valid array may not be possible for all hubs according to the above criterion. If, however, a valid array of parameters for at least three hubs, or alternatively a majority of the plurality of hubs, can be obtained this may be determined to be valid. In some cases it may not be possible to obtain a valid array of parameters for a particular sensor, in which case a comparison may be made between sensors more widely spaced apart from each other. If a valid array can then be determined on this basis the wider spacing may be recorded. In some cases one or more sensors may still not have a valid array of parameters, in which case this fact may be recorded and an alert may be generated to indicate that these sensors are not sufficiently characterised.

In a third step 503, once a valid set of fingerprints is obtained for all sensors, or for all possible sensors, the arrays of parameters are stored for each sensor. These stored arrays are then used in an ongoing change detection routine, described below.

A further check may be initiated prior to the process described above to ensure that the hubs are in their correct locations. A change in position of one or more hubs will result in a change in apparent fingerprint for some or all of the sensors. To detect this, a series of test signals may be transmitted by each hub and received by the other hubs to determine a fingerprint for each hub. If the fingerprint determined for each hub is sufficiently close to a predetermined measurement the process may then continue to determine fingerprints for the sensors.

Figure 6 is a flowchart illustrating an example method for detecting a change in fingerprints for a plurality of sensors in a data centre. In a first step 601 a fingerprint is determined for a sensor from signals received by the plurality of hubs. The fingerprint may be determined from an average over a set period of time, which may be shorter than the set period of time mentioned above, or may be determined from a single set of measurements, i.e. taking the latest set of measurements received by each hub. In a second step 602 a check is made as to whether the sensor is indicated as not having a valid recorded array of parameters. If the recorded array is not valid, the method returns to step 601 for a next sensor. Otherwise, a check is made at step 603 whether the current array of parameters is sufficiently close to the recorded array of parameters, i.e. if any difference between the array and the recorded array is within the measured error. A difference may be determined for example based on one or more of the measured parameters being greater than a predetermined variation, or may be determined based on a total or average of all the parameters compared to a total or average variation. If the difference is smaller than the error for the recorded array, the process continues at step 601 for the next sensor. Otherwise, the sensor continues to be monitored and a time is recorded at step 604, indicating a time the sensor has been marked for monitoring. If this time is less than a predetermined threshold, which may for example be equal to the set period of time for creating the average value for the recorded array, the process continues for the next sensor, returning to step 601. If the time has been exceeded, at step 605 an alert is generated. The alert may for example be made by indicating in a visual representation of the computer model the location of the sensor causing the alert. Alternatively or additionally the alert may comprise a message such as an email or text message to one or more users of the system. The process continues by returning to step 601 for the next sensor.

The above described processes described in relation to Figures 5 and 6 may operate continuously while the data centre is being monitored. The process in Figure 5 of generating an average array of parameters for each sensor may be repeated periodically to allow gradual changes in the data centre to be accounted for, while the process in Figure 6 may be repeated periodically over shorter timescales.

Upon generating an alert (step 605), the data from the sensor in question may be excluded from use in generating outputs or recommendations from the computer system, so as not to include potentially suspect data in the model. The output alert may be used or generated in different ways depending on the reliability of the stored fingerprint for a sensor. For a higher reliability fingerprint, for example comprising an array of parameters from all hubs with a relatively low error, an alert may be generated immediately, whereas a sensor having a lower quality fingerprint, i.e. with a reduced number of reading from hubs and/or with a higher error, may be marked to be inspected on a subsequent site visit. Different types of alerts may therefore be generated depending on the quality of the stored fingerprint for any particular sensor.

Furthermore, the alert may be given a high or low priority depending on the magnitude of the detected change in the array of parameters. If the magnitude of change is high, the alert may be given higher priority, as this is more likely to be a misplaced sensor and/or erroneous data. If the change is lower the alert may have a lower priority, for example indicating a check on a subsequent site visit.

Although RSSI is given in the description above as a way of determining a fingerprint for a sensor, other techniques may be used. One possible alternative technique is the use of time of flight measurement (available in Ultra Wideband transmitters), angle of arrival (available via Bluetooth 5.1) and distance measurements through phase angle changes (currently under development for Bluetooth implementations). In each case, an array of parameters may be determined for each sensor, whether the parameters measure signal strength, angle of arrival, time of flight or absolute distance, and this array can be stored as a characteristic fingerprint for the sensor for comparison with future measurements. A benefit of using RSSI as a measure is that the technology is well established and the implementation simple and cost-effective, whereas other techniques such as Bluetooth may require more complex modules and may require higher power usage, which can be limiting for battery powered sensors.

A risk with wireless systems is that transmitted messages can be copied, modified and retransmitted as a way of injecting misleading data into the system. Standard, well known methods of authentication and encryption may be used to address this. The fingerprinting concept described herein can also be applied as an additional or alternative defence. Any attempt to emulate a sensor by transmitting a duplicate signal will necessarily be at a different location because physical access to a data centre is tightly controlled. Without knowledge of the fingerprint of the datacentre it would be extremely difficult to replicate the RSSI pattern of a given sensor. The software would rapidly be able to detect an attack of this nature because the fingerprint for the sensor would alternate between two different patterns and would also be likely to involve substantial changes to the array of parameters.

## Claims

1. A computer-implemented method of monitoring a data centre comprising a plurality of sensors and a plurality of receiver hubs, each receiver hub configured to receive radio signal packets from each of the plurality of sensors, the method comprising:
determining for each sensor an array of parameters derived from the radio signals packets received by each hub;
determining a change over time in the array of parameters for each sensor; and
providing an alert if the change over time for one or more of the plurality of sensors exceeds a predetermined threshold.

2. The method of claim 1, wherein the array of parameters for each sensor comprises measurements of relative signal strength of the radio signal packets received by the plurality of hubs.

3. The method of claim 1 or claim 2, wherein the array of parameters for each sensor comprises measurements of a distance to each of the plurality of hubs.

4. The method of claim 1 or claim 2, wherein the array of parameters for each sensor comprises measurements of an angle of arrival to each of the plurality of hubs.

5. The method of claim 1 or claim 2, wherein the array of parameters for each sensor comprises measurements of a time of flight of a signal from the sensor to each of the plurality of hubs.

6. The method of any preceding claim, wherein the predetermined threshold is calculated from an averaged array of parameters determined over a preceding period of time.

7. The method of any preceding claim, wherein the data centre comprises at least three hubs.

8. The method of any preceding claim, wherein the plurality of sensors are configured to measure temperature.

9. The method of any preceding claim, wherein one or more of the plurality of sensors is configured to measure humidity, air flow, air pressure and/or an indication of electrical power drawn by an equipment rack to which each sensor is attached.

10. The method of any preceding claim, wherein the alert comprises an indication in a computer-generated representation of the data centre of a location of the one or more of the plurality of sensors for which the alert is provided.

11. The method of any preceding claim, wherein the alert comprises a message identifying the one or more of the plurality of sensors for which the alert is provided.

12. The method of claim 10 or claim 11 wherein, if the change over time exceeds the predetermined threshold for more than one of the plurality of sensors, the indication in the computer-generated representation of the data centre comprises an area in the data centre covering the more than one of the plurality of sensors.

13. The method of any preceding claim, wherein the step of determining change over time for each sensor is repeated at intervals of 10 minutes or less.

14. A computer program comprising instructions for causing a computer to perform the method according to any preceding claim.

15. A computer system configured to perform the method according to any one of claims 1 to 13.
